# EUROPÄISCHE PATENTSCHRIFT

(11) **EP 2 930 010 B1**
(45) Veröffentlichungstag und Bekanntmachung des Hinweises auf die Patenterteilung: **09.11.2016**
(21) Anmeldenummer: 14164235.5
(22) Anmeldetag: 10.04.2014
(51) Int. Cl.: B29C 70/88, B29D 99/00, B29C 43/56, F03D 1/06, B29L 31/08, B29K 307/04

(54) **Gurtbaugruppe für ein Windenergieanlagenrotorblatt**
Belt assembly for a wind energy assembly rotor blade
Bande pour une pale de rotor d'éoliennes

(43) Veröffentlichungstag der Anmeldung: 14.10.2015
(73) Patentinhaber: Nordex Energy GmbH, 22419 Hamburg (DE)
(72) Erfinder: Ohlerich, Nick, 18055 Rostock (DE); Klein, Hendrik, 18147 Rostock (DE); Schall, Nils-Hendric, 10711 Berlin (DE)
(74) Vertreter: Hauck Patentanwaltspartnerschaft mbB

(56) Entgegenhaltungen:
- EP-A1- 1 830 063
- WO-A1-00/14405
- WO-A1-2009/153344
- GB-A- 2 497 578

## Beschreibung

Die Erfindung betrifft eine Gurtbaugruppe für ein Windenergieanlagenrotorblatt, die einen mit Kohlenstofffasern verstärkten Gurt aufweist.

Eine solche Gurtbaugruppe ist aus der Druckschrift EP 2 561 977 A1 bekannt geworden. Die vorgefertigte Gurtbaugruppe wird nach dem Aushärten einer Kunststoffmatrix, in die die Kohlenstofffasern eingebettet sind, in eine Rotorblatthalbschale integriert.

Da die den Gurt bildenden Kohlenstofffasern elektrisch leitfähig sind, sind bei einem solchen Rotorblatt besondere Maßnahmen für einen wirksamen Blitzschutz erforderlich. Hierzu zählt insbesondere ein wirksamer Potentialausgleich zwischen einem Blitzschutzleiter, der in das Windenergieanlagenrotorblatt eingebaut wird und einen insbesondere an der Blattspitze angeordneten Blitzrezeptor mit der Blattwurzel verbindet, und dem Gurt. Durch den Potentialausgleich kann verhindert werden, dass es bei Ableitung eines hohen Blitzstroms über den Blitzschutzleiter in Folge elektromagnetischer Induktion zu so großen Potentialdifferenzen zwischen Blitzschutzleiter und Gurt kommt, dass Spannungsüberschläge auftreten. Dadurch kann eine Beschädigung des Windenergieanlagenrotorblatts durch einen Blitzschlag vermieden werden.

Aus der Druckschrift EP 1 692 752 B1 ist ein Windenergieanlagenrotorblatt bekannt geworden, bei dem ein innenliegender, elektrisch leitfähiger Holm mit einem benachbart angeordneten Blitzschutzleiter verbunden ist. Hierzu sind Potentialausgleichselemente vorgesehen, die den Holm und den Blitzschutzleiter über eine elektrische Leitung miteinander verbinden. Der Kontakt zum Holm wird über ein leitfähiges, flächiges Band hergestellt.

Aus der Druckschrift EP 1 112 448 B2, der eine Gurtbaugruppe gemäß dem Oberbegriff des Anspruchs 1 offenbart, ist ein Windenergieanlagenrotorblatt mit
mehreren elektrisch leitfähigen Gurten aus einem Kohlenstofffasermaterial bekannt geworden. Zur Erhöhung der elektrischen Leitfähigkeit der Gurte werden metallbeschichtete Kohlenstofffasern eingesetzt, sodass die Stromtragfähigkeit der Gurte für einen Einsatz als Blitzschutzleiter ausreichen soll. Zusätzlich kann ein zentral angeordneter metallischer Blitzschutzleiter eingesetzt werden. Die Gurte und gegebenenfalls der zusätzliche metallische Blitzschutzleiter sind an mehreren Längspositionen über Potentialausgleichselemente in Form von innenliegenden, elektrischen Leitern miteinander verbunden.

Aus der Druckschrift EP 1 664 528 B1 ist ein Windenergieanlagenrotorblatt mit elektrisch leitfähigen Hauptgurten aus einem Kohlenstofffasermaterial und zwei im Inneren des Rotorblatts angeordneten Blitzschutzleitern bekannt geworden. Ein Potentialausgleich zwischen einem Hauptgurt und einem Blitzschutzleiter wird über ein Kupfergitter, das den Hauptgurt kontaktiert, und eine elektrische Verbindungsleitung hergestellt. Ein mittlerer Abschnitt der Verbindungsleitung ist mit dem Blitzschutzleiter verschraubt. Ein freies Ende der Verbindungsleitung ist gemeinsam mit metallischen Zwischenstücken und dem Kupfergitter mit einem Blitzschutzrezeptor verschraubt.

Aus der Druckschrift EP 2 110 552 A1 ist ein Windenergieanlagenrotorblatt bekannt geworden, bei dem ein flacher oder geflochtener Blitzschutzleiter im Bereich eines Stegs angeordnet ist. Der Blitzschutzleiter wird bei der Herstellung des Windenergieanlagenrotorblatts in einem Vakuuminfusionsverfahren in ein Laminat integriert.

Davon ausgehend ist es die Aufgabe der Erfindung, eine Gurtbaugruppe für ein Windenergieanlagenrotorblatt mit einem kohlenstofffaserverstärkten Gurt zur Verfügung zu stellen, die eine einfachere Herstellung eines Windenergieanlagenrotorblatts mit einer Blitzschutzeinrichtung ermöglicht, sowie ein entsprechendes Herstellungsverfahren.

Diese Aufgabe wird gelöst durch die Gurtbaugruppe mit den Merkmalen des Anspruchs 1. Vorteilhafte Ausgestaltungen sind in den sich anschließenden Unteransprüchen angegeben.

Die Gurtbaugruppe für ein Windenergieanlagenrotorblatt weist Folgendes auf:
- einen mit Kohlenstofffasern verstärkten Gurt,
- einen Blitzschutzleiter, der entlang dem Gurt verlaufend angeordnet ist, und
- mindestens ein Potentialausgleichselement, das eine elektrische Verbindung zwischen dem Gurt und dem Blitzschutzleiter herstellt, wobei
- die Kohlenstofffasern des Gurts, der Blitzschutzleiter und das mindestens eine Potentialausgleichselement in eine gemeinsame Kunststoffmatrix eingebettet und als vorgefertigte Baugruppe zur Integration in eine Windenergieanlagenrotorblatthalbschale nach dem Aushärten der Kunststoffmatrix ausgebildet sind.

Der Gurt bildet ein Element der Tragstruktur des Windenergieanlagenrotorblatts. Insbesondere kann es sich um einen Hauptgurt handeln, der einen Großteil der im Betrieb des Windenergieanlagenrotorblatts auftretenden Zugbelastungen aufnimmt. Die den Gurt bildenden Kohlenstofffasern können in Form von Gelegen in eine Gurtbaugruppenherstellungsform eingelegt werden, in einer Vielzahl von übereinanderliegenden Lagen. Im Querschnitt kann der Gurt rechteckig oder trapezförmig ausgebildet sein. Er kann eine Länge von beispielsweise 40 m oder mehr aufweisen.

Der Blitzschutzleiter verläuft entlang dem Gurt und erstreckt sich insbesondere über die gesamte Länge des Gurts, gegebenenfalls auch darüber hinaus. Er weist eine Stromtragfähigkeit auf, die zur Ableitung eines Blitzstroms ausreichend ist. Hierzu kann er beispielsweise aus Kupfer bestehen und einen wirksamen Querschnitt von 25 mm² oder mehr, insbesondere von etwa 50 mm², aufweisen. Er erstreckt sich parallel zu dem Gurt und kann unmittelbar an dem Gurt oder parallel dazu in einem Abstand angeordnet sein, insbesondere eng benachbart zu dem Gurt. Der Blitzschutzleiter kann ein massiver metallischer Leiter sein oder eine Vielzahl von Einzeldrähten aufweisen, insbesondere in Form eines Flechtschlauchs, zum Beispiel aus Kupfer.

Das Potentialausgleichselement ist elektrisch leitfähig und steht in elektrischem Kontakt einerseits mit dem Gurt und andererseits mit dem Blitzschutzleiter. Es kann ebenfalls eine Vielzahl von Einzeldrähten aufweisen, insbesondere aus Kupfer. Beispielsweise kann es sich um eine Gewebe, Geflecht oder Gitter aus einer Vielzahl von Einzeldrähten handeln, insbesondere um eine Filtertresse, die üblicherweise als Filtermedium eingesetzt wird.

Bei der Erfindung sind die Kohlenstofffasern des Gurts, der Blitzschutzleiter und das mindestens eine Potentialausgleichselement in eine gemeinsame Kunststoffmatrix eingebettet. Dies kann insbesondere in einem Vakuuminfusionsverfahren in einer Herstellungsform für die Gurtbaugruppe erfolgen. Bei einem Vakuuminfusionsverfahren werden die einzubettenden Elemente in einer Herstellungsform angeordnet, die luftdicht geschlossen und nachfolgend evakuiert wird. Durch den Unterdruck innerhalb der Herstellungsform strömt ein flüssiges Kunststoffmaterial in die Form ein. Nach dem Aushärten des flüssigen Kunststoffmaterials sind die Elemente in eine Kunststoffmatrix eingebettet.

Die nach dem Aushärten der Kunststoffmatrix vorliegende vorgefertigte Gurtbaugruppe kann aus ihrer Herstellungsform entnommen und nachfolgend in eine Windenergieanlagenrotorblatthalbschale integriert werden. Hierzu kann sie beispielsweise mit einer vorgefertigten Windenergieanlagenrotorblatthalbschale verklebt werden und/oder in einem weiteren Vakuuminfusionsverfahren gemeinsam mit Verstärkungsfasern und gegebenenfalls weiteren Elementen der Windenergieanlagenrotorblatthalbschale in eine Kunststoffmatrix eingebettet werden.

Die Erfindung beruht auf der Erkenntnis, dass die nachträgliche Ausstattung eines Rotorblatts mit einem vorgefertigten Hauptgurt mit einer Blitzschutzeinrichtung, die insbesondere einen Potentialausgleich zu dem Hauptgurt vorsieht, aufwendig ist. Durch die erfindungsgemäße Einbeziehung des Blitzschutzleiters und des mindestens einen Potentialausgleichselements in den Herstellungsprozess für die Gurtbaugruppe vereinfacht sich die weitere Herstellung des Windenergieanlagenrotorblatts. Insbesondere können die zur Herstellung der Windenergieanlagenrotorblatthalbschale eingesetzten, großformatigen Herstellungsformen effizienter eingesetzt werden, weil zentrale Elemente der Blitzschutzeinrichtung gemeinsam mit dem Gurt bereits vorgefertigt sind. Ein weiterer Vorteil besteht in der bei der Erfindung besonders einfachen und zuverlässigen Kontaktierung des Blitzschutzleiters und insbesondere des Gurts durch das mindestens eine Potentialausgleichselement.

In einer Ausgestaltung ist das Potentialausgleichselement schräg zu einer Längsrichtung des Gurts angeordnet. Der Winkel zwischen einer Längsrichtung des Potentialausgleichselements und der Längsrichtung des Gurts kann beispielsweise im Bereich von 10° bis 80° liegen, vorzugsweise im Bereich von etwa 30° bis etwa 60°. Diese Ausgestaltung berücksichtigt die zusätzliche, dem Gurt durch das Potentialausgleichselement verliehene Festigkeit und sorgt dafür, dass es durch das Potentialausgleichselement in Längsrichtung der Gurtbaugruppe keine sprunghafte Festigkeitsänderung gibt.

In einer Ausgestaltung liegt ein Abschnitt des Potentialausgleichselements an einer ersten Lage der Kohlenstofffasern des Gurts an und ist von einer zweiten Lage der Kohlenstofffasern des Gurts oder einer Lage von weiteren Kohlenstofffasern überdeckt, welche bis an den Blitzschutzleiter reicht. Der Abschnitt des Potentialausgleichselements ist somit zwischen zwei Kohlenstofffaserlagen angeordnet. Der Übergangswiderstand zwischen dem Potentialausgleichselement und dem Gurt kann dadurch reduziert werden. Durch das Aufbringen einer elektrisch leitfähigen Deckschicht aus Kohlenstofffasern verbessert sich außerdem der elektrische Kontakt zwischen dem Gurt und dem Blitzschutzleiter.

In einer Ausgestaltung weist der Blitzschutzleiter einen massiven Verbindungskörper aus Metall zur Verbindung mit einem nicht zu der Gurtbaugruppe gehörenden Element einer Blitzschutzeinrichtung auf. Im fertigen Windenergieanlagenrotorblatt muss der Blitzschutzleiter in der Regel mit weiteren Elementen einer Blitzschutzeinrichtung verbunden werden, die nicht in die Gurtbaugruppe integriert sind. Hierbei kann es sich beispielsweise um einen oder mehrere Blitzschutzrezeptoren handeln oder um ein weiteres Potentialausgleichselement, das einen Potentialausgleich zwischen dem Blitzschutzleiter und einem sonstigen elektrisch leitfähigen Element des Windenergieanlagenrotorblatts bewirkt. Beispielsweise kann ein weiterer kohlenstoffhaltiger Gurt des Windenergieanlagenrotorblatts, ein weiterer Blitzschutzleiter, eine Abschirmung einer Signalleitung oder eine elektrische Versorgungsleitung auf diese Weise mit dem Blitzschutzleiter verbunden werden. Der Verbindungskörper kann insbesondere aus Kupfer bestehen. Die massive Ausbildung stellt hinreichend große Kontaktflächen zur Verfügung und ermöglicht die Herstellung einer ausreichend stromtragfähigen Verbindung.

In einer Ausgestaltung weist der massive Verbindungskörper ein Innengewinde auf. Das Innengewinde kann in einer Durchgangsbohrung in dem Verbindungskörper angeordnet sein. Es ermöglicht das Herstellen einer Schraubverbindung zur Herstellung der elektrischen Verbindung.

In einer Ausgestaltung verbindet der massive Verbindungskörper den Blitzschutzleiter und das Potentialausgleichselement elektrisch miteinander. Insbesondere kann der Verbindungskörper in einem exothermen Schweißverfahren hergestellt sein, sodass Abschnitte des Potentialausgleichselements und des Blitzschutzleiters, insbesondere jeweils eine Vielzahl von den diese Elemente bildenden Einzeldrähten, in dem Verbindungskörper miteinander verschmolzen sind. Der Verbindungskörper kann eine Doppelfunktion erfüllen. Einerseits stellt er eine dauerhafte und zuverlässige elektrische Verbindung zwischen Blitzschutzleiter und Potentialausgleichselement her, andererseits bietet er eine Anschlussmöglichkeit zur Herstellung einer weiteren elektrischen Verbindung, wie bereits erläutert.

In einer Ausgestaltung ist der massive Verbindungskörper an einer Innenseite der Gurtbaugruppe angeordnet, die nach Integration der Gurtbaugruppe in eine Windenergieanlagenrotorblatthalbschale einem Innenraum der Windenergieanlagenrotorblatthalbschale zugewandt ist. Bei dieser Anordnung ist der Verbindungskörper vom Innenraum der Windenergieanlagenrotorblatthalbschale aus zugänglich, sodass innenliegende Potentialausgleichselemente besonders einfach angeschlossen werden können.

In einer Ausgestaltung weist die Gurtbaugruppe einen seitlich der Kohlenstofffasern des Gurts angeordneten Einleger aus einem Kernmaterial auf, und der Blitzschutzleiter ist in einer Nut des Einlegers angeordnet. Das Kernmaterial kann beispielsweise Balsaholz oder ein geschäumtes Kunststoffmaterial sein, wie es zur Herstellung einer Mittellage von in Sandwichbauweise gefertigten Bauteilen aus faserverstärkten Kunststoffmaterialien üblich ist. Das Material des Einlegers kann insbesondere dem Kernmaterial an der jeweiligen Längsposition des Rotorblatts entsprechen. Es können mehrere Einleger in die Gurtbaugruppe integriert sein, insbesondere angeordnet zu beiden Seiten der Kohlenstofffasern des Gurts. Die Einleger können komplementär zu seitlichen Flächen des Gurts geformt sein, sodass sie sich unmittelbar an die Kohlenstofffasern anschließen und den Querschnitt des Gurts so ergänzen, dass die Gurtbaugruppe insgesamt eine zur Integration in eine Windenergieanlagenrotorblatthalbschale vorteilhafte Form aufweist. Insgesamt kann die um eine oder mehrere Einleger ergänzte Gurtbaugruppe im Querschnitt etwa rechteckförmig oder etwa trapezförmig ausgebildet sein. Mit etwa rechteckförmig oder etwa trapezförmig ist gemeint, dass insbesondere die Längsseiten der Querschnittsform gegebenenfalls leicht gekrümmt sein können, insbesondere entsprechend der Geometrie einer aerodynamischen Hülle des Windenergieanlagenrotorblatts, für das die Gurtbaugruppe bestimmt ist. Das Ausbilden einer Nut in dem Einleger (es kann sich zum Beispiel um einen im Querschnitt keilförmigen, unmittelbar an die Kohlenstofffasern angrenzenden Einleger oder um einen benachbart dazu angeordneten, im Querschnitt im Wesentlichen rechteckigen Einleger handeln) vereinfacht die Anordnung des Blitzschutzleiters, die durch die Nut vorgegeben ist. Zugleich wird eine vollständige Einbettung des Blitzschutzleiters in die Kunststoffmatrix unter Einhaltung einer gewünschten Querschnittsgeometrie der Gurtbaugruppe begünstigt. Ist der Querschnitt der Gurtbaugruppe insgesamt etwa rechteckig, können - stets bezogen auf die vorgesehene Anordnung der Gurtbaugruppe in einer Windenergieanlagenrotorblatthalbschale - die beiden Längsseiten des Rechtecks einer Innenseite bzw. Außenseite des Windenergieanlagenrotorblatts zugewandt sein oder diese bilden und die beiden Schmalseiten des Rechtecks können einer Profilnasenkante und einer Profilendkante der Windenergieanlagenrotorblatthalbschale zugewandt sein. Der Blitzschutzleiter kann insbesondere in einer Nut eines Einlegers angeordnet sein, der an der der Profilendkante zugewandte Seite der Gurtbaugruppe angeordnet ist.

In einer Ausgestaltung weist der Einleger eine Durchgangsöffnung auf, die von der Nut zu einer gegenüberliegenden Seite des Einlegers führt und in der ein elektrisch mit dem Blitzschutzleiter verbundener Metallkörper angeordnet werden kann. Insbesondere kann die Nut an einer Innenseite der Gurtbaugruppe angeordnet sein und die Durchgangsöffnung kann von dort zu einer Außenseite des Einlegers führen. Der Metallkörper kann insbesondere an einem Verbindungskörper anliegen und/oder an diesem befestigt sein. Auf diese Weise stellt der Metallkörper einen an der Außenseite oder nahe der Außenseite der Gurtbaugruppe angeordneten Anschlusspunkt zum Blitzschutzleiter zur Verfügung. An diesen kann beispielsweise ein an der Außenseite der Windenergieanlagenrotorblatthalbschale angeordnetes Potentialausgleichselement oder ein dort angeordneter Blitzschutzleiter angeschlossen werden.

In einer Ausgestaltung weist der Einleger im Bereich der Durchgangsöffnung einen Einsatz aus einem festeren Material auf, in dem die Durchgangsöffnung angeordnet ist. Das festere Material weist eine größere Festigkeit auf als das Kernmaterial, aus dem die übrigen Bereiche des Einlegers bestehen. Bei dem festeren Material kann es sich beispielsweise um glasfaserverstärkten Kunststoff handeln. Die Verwendung eines festeren Materials in einer Umgebung der Durchgangsöffnung ermöglicht eine mechanisch stabilere Fixierung des Metallkörpers in der Durchgangsöffnung und/oder eine stabilere Unterfütterung des Verbindungskörpers für eine von einer Außenseite des Windenergieanlagenrotorblatts an diesem angreifende Befestigung. Der Einsatz aus dem festeren Material kann sich auch über den Bereich des Potentialausgleichselements erstrecken. Dadurch ist eine Vereinheitlichung der Einsätze über die Länge des Rotorblatts möglich, unabhängig davon ob Durchgangsöffnungen vorhanden sind oder nicht.

In einer Ausgestaltung ist der Metallkörper eine Metallbuchse, die in ein Innengewinde des Verbindungskörpers eingeschraubt ist und die eine durchgängige Gewindebohrung aufweist, die von einer Innenseite der Gurtbaugruppe bis zur gegenüberliegenden Außenseite der Gurtbaugruppe verläuft. Bei dieser Ausgestaltung ist der Metallkörper sicher und ausreichend stromtragfähig an dem Verbindungskörper befestigt und bietet an der Innenseite und der Außenseite der Gurtbaugruppe eine einfache Anschlussmöglichkeit in Form der dort angeordneten Gewindebohrung. Die Metallbuchse kann beispielsweise aus Kupfer, Aluminium, Stahl, Messing oder einer sonstigen Legierung bestehen.

In einer Ausgestaltung weist die Gurtbaugruppe eine Schicht eines Fasermaterials auf, die an einer der Innenseite gegenüberliegenden Außenseite der Gurtbaugruppe angeordnet ist und an die Kohlenstofffasern des Gurts angrenzt. Die Schicht des Fasermaterials kann mehrere Lagen eines Fasermaterials aufweisen, beispielsweise eine oder mehrere Lagen eines Glasfasergewebes oder -geleges. Bei Herstellung der Gurtbaugruppe in einem Vakuuminfusionsverfahren kann diese Schicht eine gleichmäßige Verteilung des flüssigen Kunststoffmaterials begünstigen. Die Schicht des Fasermaterials kann außerdem an einen oder mehrere Einleger angrenzen bzw. unterhalb von diesen angeordnet sein, sodass die Schicht des Fasermaterials den oder die Einleger und das Kohlenstofffasermaterial des Gurts zu einer stabilen Einheit verbindet.

Die oben genannte Aufgabe wird ebenfalls gelöst durch das Verfahren mit den Merkmalen des Anspruchs 13. Vorteilhafte Ausgestaltungen sind in den sich anschließenden Unteransprüchen angegeben. Das Verfahren dient zur Herstellung einer Windenergieanlagenrotorblatthalbschale und weist die folgenden Schritte auf:
- Bereitstellen einer Herstellungsform für die Windenergieanlagenrotorblatthalbschale,
- Einlegen von Verstärkungsfasern in die Herstellungsform,
- Anordnen einer Gurtbaugruppe mit den Merkmalen eines der Ansprüche 1 bis 12 in der Herstellungsform,
- Einbetten der Verstärkungsfasern und der Gurtbaugruppe in eine Kunststoffmatrix.

Bei dem Verfahren wird die vorstehend beschriebene Gurtbaugruppe in eine Windenergieanlagenrotorblatthalbschale integriert. Dies kann insbesondere in einem Vakuuminfusionsverfahren geschehen, in dem die Verstärkungsfasern erstmals in eine Kunststoffmatrix eingebettet und gleichzeitig mit der bereits ausgehärteten, vorgefertigten Gurtbaugruppe verbunden werden. Es versteht sich, dass die Gurtbaugruppe nicht notwendigerweise allseitig in die Kunststoffmatrix der Windenergieanlagenrotorblatthalbschale eingebettet werden muss. Das Einbetten der Gurtbaugruppe kann auch im Wesentlichen in einer Verklebung der Gurtbaugruppe mit den Verstärkungsfasern der Windenergieanlagenrotorblatthalbschale bestehen.

Zu den Merkmalen des Verfahrens und zu dessen Vorteilen wird auf die vorstehenden Erläuterungen zur bei dem Verfahren verwendeten Gurtbaugruppe verwiesen, die entsprechend gelten.

In einer Ausgestaltung des Verfahrens wird eine elektrische Verbindung zwischen dem Blitzschutzleiter und einem nicht zu der Gurtbaugruppe gehörenden Element einer Blitzschutzeinrichtung nach dem Einbetten der Verstärkungsfasern und der Gurtbaugruppe in die Kunststoffmatrix hergestellt. Bei dem nicht zu der Gurtbaugruppe gehörenden Element der Blitzschutzeinrichtung kann es sich beispielsweise um einen weiteren Gurt, einen weiteren Blitzschutzleiter, einen Blitzrezeptor oder ein weiteres Potentialausgleichselement handeln, wie im Zusammenhang mit der Gurtbaugruppe bereits aufgezeigt. Das Herstellen der Verbindung kann insbesondere unter Ausnutzung eines in die Gurtbaugruppe integrierten Verbindungskörpers oder Metallkörpers, wie vorstehend erläutert, erfolgen. Auf diese Weise kann die Blitzschutzeinrichtung des Windenergieanlagenrotorblatts unter Verwendung der vorgefertigten Baugruppe besonders einfach vervollständigt werden.

In einer Ausgestaltung wird eine Öffnung der Gurtbaugruppe, die zur Herstellung der elektrischen Verbindung verwendet wird, vor dem Einbetten der Verstärkungsfasern und der Gurtbaugruppe in die Kunststoffmatrix mit einer Abdeckung verschlossen. Die Abdeckung kann insbesondere ein Klebepad sein, das auf die Öffnung in der Gurtbaugruppe aufgeklebt wird. Die Öffnung kann insbesondere eine Gewindebohrung in einem Verbindungskörper oder einem Metallkörper der Gurtbaugruppe sein, wie vorstehend erläutert. Nach dem Einbetten der Verstärkungsfasern und der Gurtbaugruppe in die Kunststoffmatrix kann die Öffnung durch Durchbohren des darüber liegenden Laminats und des Klebepads einfach wieder frei zugänglich gemacht werden.

Nachfolgend wird die Erfindung anhand eines in Figuren dargestellten Ausführungsbeispiels näher erläutert. Es zeigen:
- Fig. 1: einen Ausschnitt einer erfindungsgemäßen Gurtbaugruppe in einer Draufsicht auf die Innenseite,
- Fig. 2: einen Querschnitt durch die Gurtbaugruppe aus Fig. 1 entlang der mit A-A bezeichneten Ebene,
- Fig. 3: einen Querschnitt durch die Gurtbaugruppe der Fig. 1 entlang der mit B-B bezeichneten Ebene,
- Fig. 4: einen Querschnitt durch die Gurtbaugruppe aus Fig. 1 entlang der mit C-C bezeichneten Ebene,
- Fig. 5: eine perspektivische Darstellung eines Abschnitts eines Einlegers der Gurtbaugruppe aus Fig. 1,
- Fig. 6: einen Querschnitt durch die Gurtbaugruppe aus Fig. 1 entlang der in Fig. 4 mit D-D bezeichneten Ebene,
- Fig. 7: den in Fig. 6 dargestellten Ausschnitt der Gurtbaugruppe aus Fig. 1 nach Integration in eine Windenergieanlagenrotorblatthalbschale.

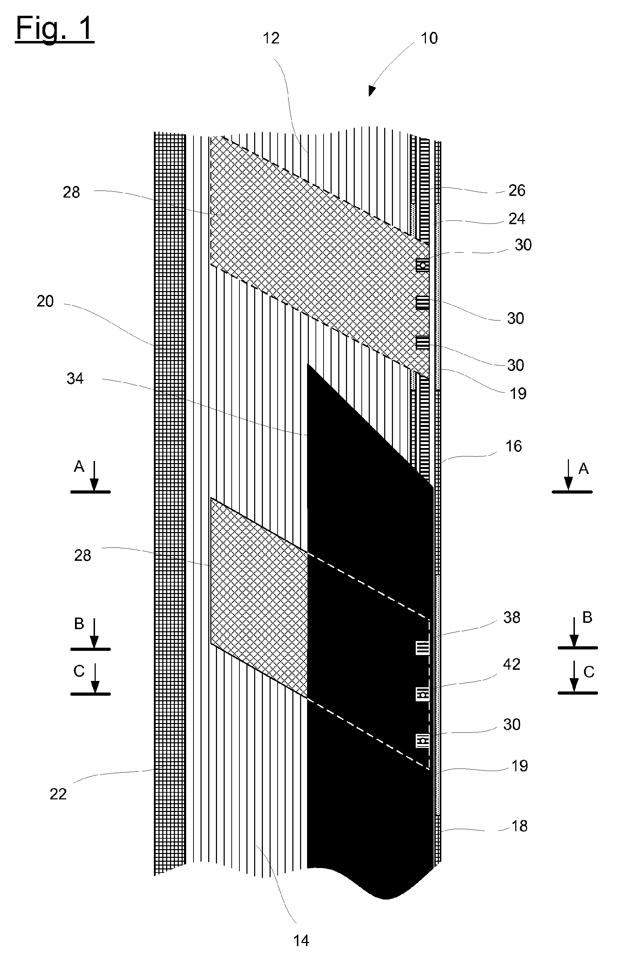

In der Fig. 1 ist ein ca. 2 m langer Abschnitt einer Gurtbaugruppe 10 für ein Windenergieanlagenrotorblatt in einer Draufsicht gezeigt. Der dargestellte Abschnitt setzt sich nach unten bis hin zu einem blattwurzelseitigen Ende fort, nach oben bis hin zu einem blattspitzenseitigen Ende. Insgesamt weist die Gurtbaugruppe 10 eine Länge von beispielsweise 40 m oder mehr auf.

Eine Vielzahl von Kohlenstofffasern erstreckt sich entlang einer Längsrichtung der Gurtbaugruppe 10 vom blattwurzelseitigen Ende bis zum blattspitzenseitigen Ende. Sie bildet einen Gurt 12. Die Gurtbaugruppe 10 weist eine Innenseite 14 auf, die dem Betrachter zugewandt ist und die nach Integration der Gurtbaugruppe 10 in eine Windenergieanlagenrotorblatthalbschale in einen Innenraum der Halbschale weist. Die in der Fig. 1 rechts angeordnete Seitenfläche 16 ist einer Profilendkante zugewandt und von einem Einleger 18 aus einem Kernmaterial gebildet. Die in der Fig. 1 links angeordnete Seitenfläche 20 der Gurtbaugruppe 10 ist einer Profilnasenkante zugewandt und von einem weiteren Einleger 22 gebildet.

Der Einleger 18 weist an der Innenseite 14 der Gurtbaugruppe 10 eine Nut 24 auf, in der ein Blitzschutzleiter 26, der aus einem Kupferflechtschlauch besteht, angeordnet ist. Im Bereich der Potentialausgleichselemente 28 hat der Einleger 18 Einsätze 19 aus einem GfK-Material, um eine höhere Festigkeit zu erreichen.

Die beiden rautenförmige Potentialausgleichselemente 28 sind Zuschnitte aus einer Kupferfiltertresse. Sie liegen großflächig an der Innenseite des Gurts 12 an und sind jeweils über drei Verbindungskörper 30 mit dem Blitzschutzleiter 26 verbunden. Auf diese Weise wird eine elektrische Verbindung zwischen dem Gurt 12 und dem Blitzschutzleiter 26 hergestellt.

Das untere der beiden gezeigten Potentialausgleichselemente 28 ist teilweise von einer Deckschicht 34 aus einem Kohlenstofffasermaterial verdeckt. Bei dem oberen Potentialausgleichselement 28 ist eine solche Deckschicht 34 ebenfalls vorhanden, aus Gründen der Darstellung jedoch nicht gezeigt. Durch das Aufbringen der elektrisch leitfähigen Deckschicht 34 verbessert sich der elektrische Kontakt zwischen dem Gurt 12 und dem Blitzschutzleiter 26. Die Deckschicht 34 erstreckt sich über einen Teil der Breite und über die Länge des Gurts 12. An ihren Enden ist sie in einem Winkel von ca. 45° angeschrägt. Alternativ kann die Deckschicht 34 auch nur im Bereich des Potentialausgleichelements 28 angeordnet sein. Sie ist dann ebenfalls rautenförmig ausgebildet und steht im Bereich des Blitzschutzleiters 26 über das Potentialausgleichselement 28 über. In dieser Variante sind die Potentialausgleichselemente 28 sowie die Deckschichten 34 schräg zu einer Längsrichtung des Gurts 12 angeordnet, in einem Winkel von ca. 45°.

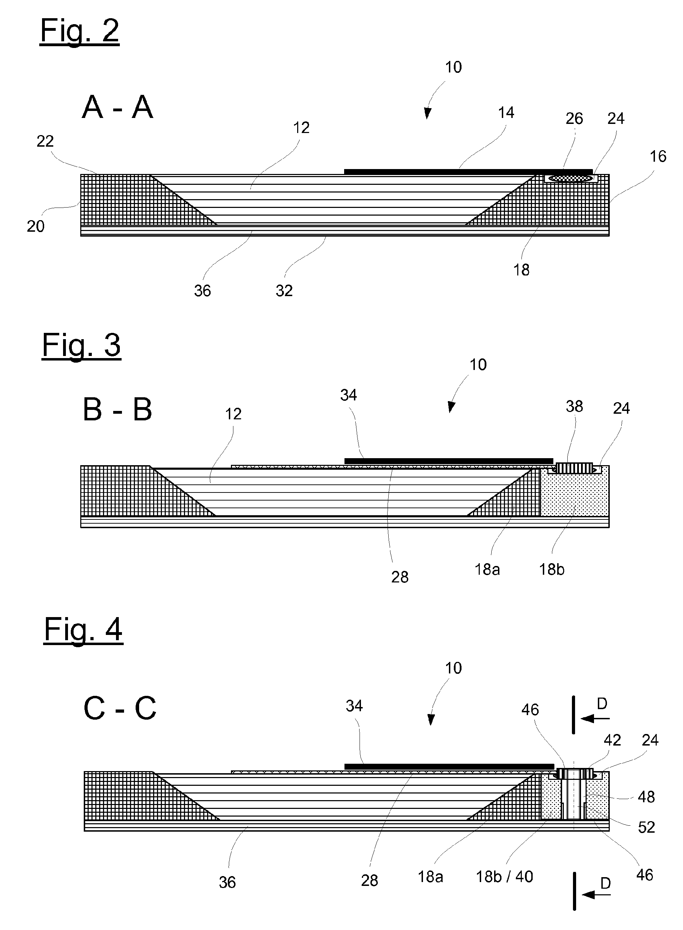

Die Querschnittsdarstellung der Fig. 2 verdeutlicht den Aufbau der Gurtbaugruppe 10 in einem Bereich, in dem kein Potentialausgleichselement 28 angeordnet ist. Man erkennt im Querschnitt unten eine Schicht 36, die aus mehreren Lagen eines Glasfasermaterials besteht und sich über die gesamte Breite der Gurtbaugruppe 10, d. h. von der Seitenfläche 16 bis zu der Seitenfläche 20 erstreckt. Man erkennt, dass der Gurt 12 im Querschnitt trapezförmig ist und aus einer Vielzahl von Lagen eines Kohlenstofffasermaterials besteht. Die beiden Einleger 18, 22 sind zu beiden Seiten des Gurts 12 angeordnet und keilförmig ausgebildet, sodass sie sich an die Schrägseiten des im Querschnitt trapezförmigen Gurts 12 komplementär anschließen. Insgesamt ist die Gurtbaugruppe 10 im Querschnitt im Wesentlichen rechteckig.

Gut erkennbar ist die im Querschnitt rechteckige Nut 24 im Einleger 18, in der der Blitzschutzleiter 26 angeordnet ist. Die Nut 24 ist so bemessen, dass sie vom Blitzschutzleiter 26 im Wesentlichen ausgefüllt ist, ohne dass die Blitzschutzleiter 26 aus der Nut herausragt. Dadurch erhält die Innenseite 14 der Gurtbaugruppe 10 eine geradlinige Kontur.

Die Schicht 36 bildet eine Außenseite 32 der Gurtbaugruppe 10 und liegt an dem Gurt 12 und an den beiden Einlegern 18, 22 an.

Fig. 3 zeigt den Querschnitt der Gurtbaugruppe 10 entlang der mit B-B bezeichneten Ebene, in der ein Verbindungskörper 38 angeordnet ist. Der Verbindungskörper 38 ist ein im Wesentlichen quaderförmiger Block aus massivem Kupfer, der eine elektrische Verbindung zwischen dem Potentialausgleichselement 28 und dem Blitzschutzleiter 26 herstellt. Zu diesem Zweck ist er in einem exothermen Schweißverfahren hergestellt worden, sodass Einzeldrähte des Potentialausgleichselements 28 und Einzeldrähte des Blitzschutzleiters 26 in ihm verschmolzen sind. Im Bereich des Verbindungskörpers 38 ist der Einleger 18 im Querschnitt zweigeteilt in einen keilförmigen Abschnitt 18a und einen rechteckförmigen Abschnitt 18b, in dem die Nut 24 ausgebildet ist. Der keilförmige Abschnitt 18a besteht aus einem schaumartigen Material, während der rechteckförmige Abschnitt 18b aus einem gehärteten glasfaserverstärkten Kunststoff besteht. In der Fig. 3 gut erkennbar ist die Abdeckung des Potentialausgleichselements 28 mit der Deckschicht 34. Im Bereich der Verbindungskörper 38 weist die Deckschicht Ausschnitte auf.

Fig. 4 zeigt einen Querschnitt durch die Gurtbaugruppe 10 im Bereich der mit C-C bezeichneten Ebene, in der ein Verbindungskörper 42 und eine Metallbuchse 44 angeordnet sind. Der Verbindungskörper 42 entspricht dem bereits erläuterten Verbindungskörper 38, weist zusätzlich jedoch ein Innengewinde 46 auf. Über das Innengewinde 46 kann von der Innenseite der Windenergieanlagenrotorblatthalbschale aus einfach eine elektrische Verbindung zu dem Blitzschutzleiter 26 hergestellt werden.

Im dargestellten Beispiel ist der Abschnitt 18b des Einlegers 18 von einem Einsatz 40 aus einem glasfaserverstärkten Kunststoff gebildet, in dem unterhalb des Verbindungskörpers 42 eine Durchgangsöffnung 44 ausgebildet ist, die von der Nut 24 bis zu einer der Außenseite 32 zugewandten Unterseite 46 des Einsatzes 40 führt. In die Durchgangsöffnung 44 ist eine Metallbuchse[NOH1] 48 eingesetzt, die mit einem Gewindeabschnitt in das Innengewinde 50 des Verbindungskörpers 42 eingeschraubt ist. Die Metallbuchse[NOH2] 48 weist ihrerseits eine Gewindebohrung 52 auf, die bis an die Unterseite 46 des Einsatzes 40 und damit bis an die Schicht 36 heranreicht. Diese Gewindebohrung 52 ist nach Integration der Gurtbaugruppe 10 in eine Windenergieanlagenrotorblatthalbschale von deren Außenseite aus zugänglich, wenn zu diesem Zweck eine Bohrung durch die Schicht 36 hindurch vorgenommen wird.

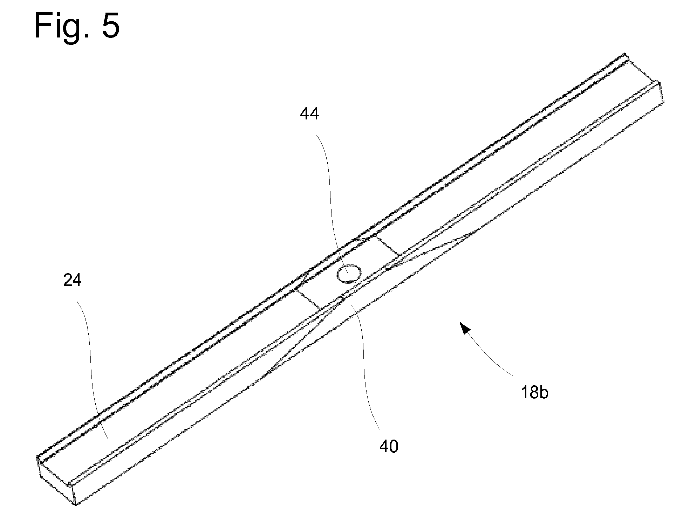

In der perspektivischen Darstellung der Fig. 5 ist die Anordnung des Einsatzes 40 in dem Einleger 18b nochmals veranschaulicht. Man erkennt den aus einem glasfaserverstärkten Kunststoff bestehenden, in einem Längsschnitt trapezförmigen Einsatz 40 und die sich daran anschließenden, weiteren Abschnitte des Einlegers, die aus einem Kernmaterial wie beispielsweise Balsaholz oder einem Kunststoffschaum bestehen. Die Nut 24, in die der Blitzschutzleiter 26 (nicht dargestellt) eingelegt wird, erstreckt sich über die gesamte Länge des Einlegers 18b. In dem Einsatz 40 ist die Durchgangsöffnung 44 erkennbar.

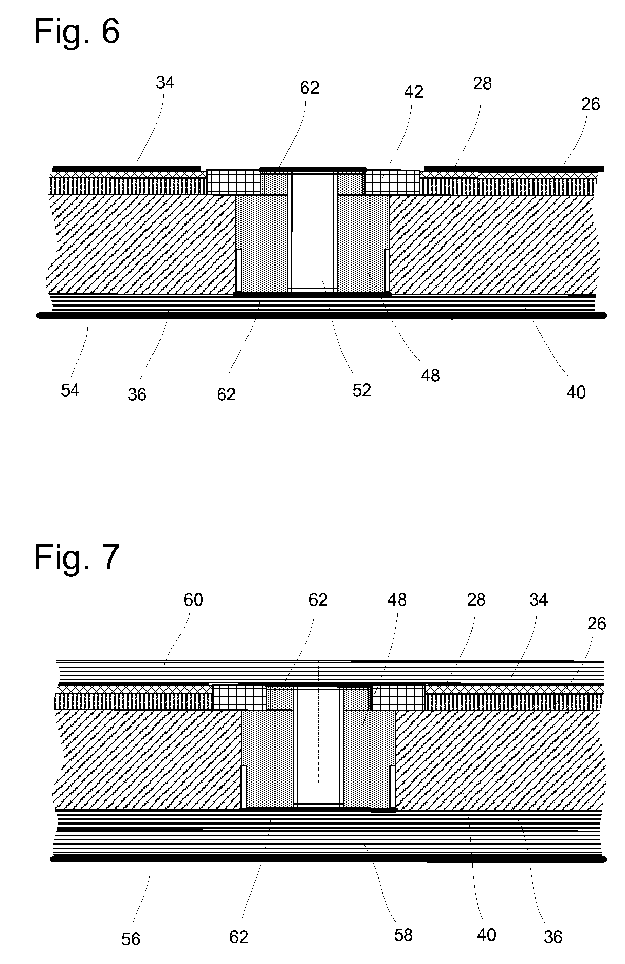

Die Querschnittsdarstellung der Fig. 6 verdeutlicht nochmals die Anordnung der Metallbuchse 48 in dem Einsatz 40. Man erkennt besonders gut den in den Verbindungskörper 42 eingeschraubten Gewindeabschnitt der Metallbuchse 48 und die darin ausgebildete Gewindebohrung 52. Der Verbindungskörper 42 verbindet den Blitzschutzleiter 26 und das unmittelbar oberhalb davon angeordnete Potentialausgleichselement 28 miteinander. Die Metallbuchse 48 wird in den Verbindungskörper 42 eingeschraubt und beim Einlegen des Blitzschutzleiters 26 in die Nut des Einlegers in die Durchgangsöffnung 44 in dem Einsatz 40 gedrückt. Das Potentialausgleichselement 28 wird flach auf die Gurtlagen aufgelegt und mit einer Deckschicht 34 aus CfK bedeckt. Die Schicht 36 aus glasfaserverstärktem Kunststoff erstreckt sich unterhalb der gesamten Anordnung und grenzt mit ihrer Unterseite an die angedeutete Herstellungsform 54 für die Gurtbaugruppe 10 an. Die Gewindebohrung 52 in der Metallbuchse 48 ist auf beiden Seiten mit einem Klebepad 62 verschlossen, sodass weder bei der Vakuuminfusion zur Herstellung der Gurtbaugruppe 10 noch bei der nachfolgenden Integration der Gurtbaugruppe 10 in eine Windenergieanlagenrotorblatthalbschale in einem weiteren Vakuuminfusionsverfahren flüssiges Kunststoffmaterial in die Gewindebohrung 52 gelangen kann.

Fig. 7 zeigt im Querschnitt, wie die Gurtbaugruppe 10 in eine Windenergieanlagenrotorblatthalbschale integriert wird. Hierzu wurde die Gurtbaugruppe 10 aus der Herstellungsform 54 für die Gurtbaugruppe entnommen und in die Herstellungsform 56 für die Windenergieanlagenrotorblatthalbschale eingelegt, nachdem zuvor mehrere Lagen von Verstärkungsfasern 58 in die Herstellungsform 56 eingelegt worden sind. Oberhalb der Gurtbaugruppe 10 sind weitere Lagen von Verstärkungsfasern 58 angeordnet. Die gesamte Anordnung wird dann in einem Vakuuminfusionsverfahren in eine Kunststoffmatrix eingebettet. Die Metallbuchse 48, die darin angeordnete Gewindebohrung 52 und/oder die Klebepads 62 bleiben dabei durch die Lagen der Verstärkungsfasern 58, 60 hindurch von außen sichtbar oder zumindest auffindbar, sodass sie durch gezielte Bohrungen von der Innenseite bzw. Außenseite der Windenergieanlagenrotorblatthalbschale aus zugänglich gemacht werden können.

### Liste der verwendeten Bezugszeichen:

- 10: Gurtbaugruppe
- 12: Gurt
- 14: Innenseite
- 16: Seitenfläche
- 18: Einleger
- 19: GfK-Einsatz
- 20: Seitenfläche
- 22: Weiterer Einleger
- 24: Nut
- 26: Blitzschutzleiter
- 28: Potentialausgleichselement
- 30: Verbindungskörper
- 32: Außenseite
- 34: Deckschicht
- 36: Schicht
- 38: Verbindungskörper
- 40: Einsatz
- 42: Verbindungskörper
- 44: Durchgangsöffnung
- 46: Unterseite
- 48: Metallbuchse
- 50: Innengewinde
- 52: Gewindebohrung
- 54: Herstellungsform für Gurtbaugruppe
- 56: Herstellungsform für Windenergieanlagenrotorblatthalbschale
- 58: Verstärkungsfasern
- 60: Verstärkungsfasern
- 62: Klebepad

## Patentansprüche

1. Gurtbaugruppe (10) für ein Windenergieanlagenrotorblatt, wobei die Gurtbaugruppe (10) einen mit Kohlenstofffasern verstärkten Gurt (12) aufweist, **gekennzeichnet durch**
• einen Blitzschutzleiter (26), der entlang dem Gurt (12) verlaufend angeordnet ist, und
• mindestens ein Potentialausgleichselement (28), das eine elektrische Verbindung zwischen dem Gurt (12) und dem Blitzschutzleiter (26) herstellt, wobei
• die Kohlenstofffasern des Gurts (12), der Blitzschutzleiter (26) und das mindestens eine Potentialausgleichselement (28) in eine gemeinsame Kunststoffmatrix eingebettet und als vorgefertigte Baugruppe zur Integration in eine Windenergieanlagenrotorblatthalbschale nach dem Aushärten der Kunststoffmatrix ausgebildet sind.

2. Gurtbaugruppe (10) nach Anspruch 1, **dadurch gekennzeichnet, dass** das mindestens eine Potentialausgleichselement (28) schräg zu einer Längsrichtung des Gurts (12) angeordnet ist.

3. Gurtbaugruppe (10) nach Anspruch 1 oder 2, **dadurch gekennzeichnet, dass** ein Abschnitt des mindestens einen Potentialausgleichselements (28) an einer ersten Lage der Kohlenstofffasern des Gurts (12) anliegt und von einer zweiten Lage der Kohlenstofffasern des Gurts (12) oder einer Lage von weiteren Kohlenstofffasern überdeckt ist.

4. Gurtbaugruppe (10) nach einem der Ansprüche 1 bis 3, **dadurch gekennzeichnet, dass** der Blitzschutzleiter (26) einen massiven Verbindungskörper (42) aus Metall zur Verbindung mit einem nicht zu der Gurtbaugruppe (10) gehörenden Element einer Blitzschutzeinrichung aufweist.

5. Gurtbaugruppe (10) nach Anspruch 4, **dadurch gekennzeichnet, dass** der massive Verbindungskörper (42) ein Innengewinde (50) aufweist.

6. Gurtbaugruppe (10) nach Anspruch 4 oder 5, **dadurch gekennzeichnet, dass** der massive Verbindungskörper (42) den Blitzschutzleiter (26) und das mindestens eine Potentialausgleichselement (28) elektrisch miteinander verbindet.

7. Gurtbaugruppe (10) nach einem der Ansprüche 4 bis 6, **dadurch gekennzeichnet, dass** der massive Verbindungskörper (42) an einer Innenseite (14) der Gurtbaugruppe (10) angeordnet ist, die nach Integration der Gurtbaugruppe (10) in eine Windenergieanlagenrotorblatthalbschale einem Innenraum der Windenergieanlagenrotorblatthalbschale zugewandt ist.

8. Gurtbaugruppe (10) nach einem der Ansprüche 1 bis 7, **dadurch gekennzeichnet, dass** die Gurtbaugruppe (10) einen seitlich der Kohlenstofffasern des Gurts (12) angeordneten Einleger (18, 22) aus einem Kernmaterial aufweist und der Blitzschutzleiter (26) in einer Nut (24) des Einlegers (18) angeordnet ist.

9. Gurtbaugruppe (10) nach Anspruch 8, **dadurch gekennzeichnet, dass** der Einleger (18) eine Durchgangsöffnung (44) aufweist, die von der Nut (24) zu einer gegenüberliegenden Seite des Einlegers (18) führt und in der ein elektrisch mit dem Blitzschutzleiter (26) verbundener Metallkörper angeordnet ist.

10. Gurtbaugruppe (10) nach Anspruch 9, **dadurch gekennzeichnet, dass** der Einleger (18) im Bereich der Durchgangsöffnung (44) einen Einsatz (40) aus einem Material aufweist, das fester ist als das Kernmaterial, und in dem die Durchgangsöffnung (44) angeordnet ist.

11. Gurtbaugruppe (10) nach Anspruch 9 oder 10, **dadurch gekennzeichnet, dass** der Metallkörper eine Metallbuchse (48) ist, die in ein Innengewinde (50) des Verbindungskörpers (42) eingeschraubt ist, und die eine durchgängige Gewindebohrung (52) aufweist, die von einer Innenseite (14) der Gurtbaugruppe (10) bis zur gegenüberliegenden Außenseite (32) der Gurtbaugruppe (10) verläuft.

12. Gurtbaugruppe (10) nach einem der Ansprüche 1 bis 11, **dadurch gekennzeichnet, dass** die Gurtbaugruppe (10) eine Schicht (36) eines Fasermaterials aufweist, die an einer der Innenseite (14) gegenüberliegenden Außenseite (32) der Gurtbaugruppe (10) angeordnet ist und an die Kohlenstofffasern des Gurts (12) angrenzt.

13. Verfahren zur Herstellung einer Windenergieanlagenrotorblatthalbschale mit den folgenden Schritten:
• Bereitstellen einer Herstellungsform (56) für die Windenergieanlagenrotorblatthalbschale (56),
• Einlegen von Verstärkungsfasern (58, 60) in die Herstellungsform (56),
• Anordnen einer Gurtbaugruppe (10) mit den Merkmalen eines der Ansprüche 1 bis 12 in der Herstellungsform (56),
• Einbetten der Verstärkungsfasern (58, 60) und der Gurtbaugruppe (10) in eine Kunststoffmatrix.

14. Verfahren nach Anspruch 13, **dadurch gekennzeichnet, dass** eine elektrische Verbindung zwischen dem Blitzschutzleiter (26) und einem nicht zu der Gurtbaugruppe (10) gehörenden Element einer Blitzschutzeinrichtung nach dem Einbetten der Verstärkungsfasern (58, 60) und der Gurtbaugruppe (10) in die Kunststoffmatrix hergestellt wird.

15. Verfahren nach Anspruch 14, **dadurch gekennzeichnet, dass** eine Öffnung der Gurtbaugruppe (10), die zur Herstellung der elektrischen Verbindung verwendet wird, beim Einbetten der Verstärkungsfasern (58, 60) und der Gurtbaugruppe (10) in die Kunststoffmatrix mit einer Abdeckung verschlossen wird.

## Claims

1. A spar cap assembly (10) for a wind turbine rotor blade, the spar cap assembly (10) having a spar cap (12) reinforced with carbon fibers, comprising
• a lightning conductor (26), which is arranged so as to run along the spar cap (12), and
• at least one potential-equalizing element (28), which establishes an electrical connection between the spar cap (12) and the lightning conductor (26),
• the carbon fibers of the spar cap (12), the lightning conductor (26) and the at least one potential-equalizing element (28) being embedded in a common polymer matrix and being designed as a prefabricated assembly for integration into a wind turbine rotor blade half-shell after the curing of the polymer matrix.

2. The spar cap assembly (10) as claimed in claim 1, wherein the at least one potential-equalizing element (28) is arranged obliquely in relation to a longitudinal direction of the spar cap (12).

3. The spar cap assembly (10) as claimed in claim 1 or 2, wherein a portion of the at least one potential-equalizing element (28) lies against a first layer of the carbon fibers of the spar cap (12) and is covered over by a second layer of the carbon fibers of the spar cap (12) or a layer of further carbon fibers.

4. The spar cap assembly (10) as claimed in one of claims 1 to 3, wherein the lightning conductor (26) has a solid connecting body (42) of metal for the connection to an element of a lightning protection device that does not belong to the spar cap assembly (10).

5. The spar cap assembly (10) as claimed in claim 4, wherein the solid connecting body (42) has an internal thread (50).

6. The spar cap assembly (10) as claimed in claim 4 or 5, wherein the solid connecting body (42) connects the lightning conductor (26) and the at least one potential-equalizing element (28) electrically to one another.

7. The spar cap assembly (10) as claimed in one of claims 4 to 6, wherein the solid connecting body (42) is arranged on an inner side (14) of the spar cap assembly (10), which after integration of the spar cap assembly (10) into a wind turbine rotor blade half-shell is facing an interior space of the wind turbine rotor blade half-shell.

8. The spar cap assembly (10) as claimed in one of claims 1 to 7, wherein the spar cap assembly (10) has an inlay (18, 22) of a core material arranged to the side of the carbon fibers of the spar cap (12), and the lightning conductor (26) is arranged in a groove (24) of the inlay (18).

9. The spar cap assembly (10) as claimed in claim 8, wherein the inlay (18) has a through-opening (44), which leads from the groove (24) to an opposite side of the inlay (18) and in which a metal body electrically connected to the lightning conductor (26) is arranged.

10. The spar cap assembly (10) as claimed in claim 9, wherein the inlay (18) has in the region of the through-opening (44) an insert (40) of a material which is stronger than the core material and in which the through-opening (44) is arranged.

11. The spar cap assembly (10) as claimed in claim 9 or 10, wherein the metal body is a metal bush (48) that is screwed into an internal thread (50) of the connecting body (42) and has a continuous threaded bore (52), which runs from an inner side (14) of the spar cap assembly (10) to the opposite outer side (32) of the spar cap assembly (10).

12. The spar cap assembly (10) as claimed in one of claims 1 to 11, wherein the spar cap assembly (10) has a layer (36) of a fiber material, which is arranged on an outer side (32) of the spar cap assembly (10) opposite from the inner side (14) and adjoins the carbon fibers of the spar cap (12).

13. A process for the production of a wind turbine rotor blade half-shell with the following steps:
• providing a production mold (56) for the wind turbine rotor blade half-shell,
• placing reinforcing fibers (58, 60) into the production mold (56),
• arranging a spar cap assembly (10) with the features of one of claims 1 to 12 in the production mold (56),
• embedding the reinforcing fibers (58, 60) and the spar cap assembly (10) in a polymer matrix.

14. The process as claimed in claim 13, wherein an electrical connection between the lightning conductor (26) and an element of a lightning protection device that does not belong to the spar cap assembly (10) is established after the embedding of the reinforcing fibers (58, 60) and the spar cap assembly (10) in the polymer matrix.

15. The process as claimed in claim 14, wherein an opening in the spar cap assembly (10) that is used for establishing the electrical connection is closed by a covering during the embedding of the reinforcing fibers (58, 60) and the spar cap assembly (10) in the polymer matrix.

## Revendications

1. Module de membrure (10) pour une pale de rotor d'éolienne, dans lequel le module de membrure (10) présente une membrure (12) renforcée avec des fibres de carbone, **caractérisé par**
• un conducteur de parafoudre (26) qui est disposé en s'étendant le long de la membrure (12), et
• au moins un élément de compensation de potentiel (28) qui réalise une connexion électrique entre la membrure (12) et le conducteur de parafoudre (26), dans lequel
• les fibres de carbone de la membrure (12), le conducteur de parafoudre (26) et l'au moins un élément de compensation de potentiel (28) sont encastrés dans une matrice de plastique commune et sont réalisés en tant que module préfabriqué pour l'intégration dans une demi-coque de pale de rotor d'éolienne après le durcissement de la matrice de plastique.

2. Module de membrure (10) selon la revendication 1, **caractérisé en ce que** l'au moins un élément de compensation de potentiel (28) est disposé en biais par rapport à un sens longitudinal de la membrure (12).

3. Module de membrure (10) selon la revendication 1 ou 2, **caractérisé en ce qu'**une section de l'au moins un élément de compensation de potentiel (28) repose sur une première couche des fibres de carbone de la membrure (12) et est recouverte par une seconde couche des fibres de carbone de la membrure (12) ou une couche d'autres fibres de carbone.

4. Module de membrure (10) selon une des revendications 1 à 3, **caractérisé en ce que** le conducteur de parafoudre (26) présente un corps de connexion massif (42) en métal pour la connexion à un élément n'appartenant pas au module de membrure (10) d'un dispositif de parafoudre.

5. Module de membrure (10) selon la revendication 4, **caractérisé en ce que** le corps de connexion massif (42) présente un filetage interne (50).

6. Module de membrure (10) selon la revendication 4 ou 5, **caractérisé en ce que** le corps de connexion massif (42) connecte le conducteur de parafoudre (26) et l'au moins un élément de compensation de potentiel (28) électriquement l'un à l'autre.

7. Module de membrure (10) selon une des revendications 4 à 6, **caractérisé en ce que** le corps de connexion massif (42) est disposé sur un côté interne (14) du module de membrure (10) qui est tourné après intégration du module de membrure (10) dans une demi-coque de pale de rotor d'éolienne vers un espace interne de la demi-coque de pale de rotor d'éolienne.

8. Module de membrure (10) selon une des revendications 1 à 7, **caractérisé en ce que** le module de membrure (10) présente un insert (18, 22) disposé latéralement des fibres de carbone de la membrure (12) en un matériau de noyau et le conducteur de parafoudre (26) est disposé dans une rainure (24) de l'insert (18).

9. Module de membrure (10) selon la revendication 8, **caractérisé en ce que** l'insert (18) présente une ouverture de passage (44) qui conduit de la rainure (24) à un côté opposé de l'insert (18) et dans laquelle est disposé un corps métallique connecté électriquement au conducteur de parafoudre (26).

10. Module de membrure (10) selon la revendication 9, **caractérisé en ce que** l'insert (18) présente dans la région de l'ouverture de passage (44) un empiècement (40) en un matériau qui est plus solide que le matériau de noyau et dans lequel est disposée l'ouverture de passage (44).

11. Module de membrure (10) selon la revendication 9 ou 10, **caractérisé en ce que** le corps métallique est une douille métallique (48) qui est vissée dans un filetage interne (50) du corps de connexion (42) et qui présente un alésage fileté continu (52) qui s'étend d'un côté interne (14) du module de membrure (10) jusqu'au côté externe opposé (32) du module de membrure (10).

12. Module de membrure (10) selon une des revendications 1 à 11, **caractérisé en ce que** le module de membrure (10) présente une couche (36) d'un matériau fibreux qui est disposée sur un côté externe (32) opposé au côté interne (14) du module de membrure (10) et jouxte les fibres de carbone de la membrure (12).

13. Procédé de fabrication d'une demi-coque de pale de rotor d'éolienne avec les étapes suivantes :
• mise à disposition d'un moule de fabrication (56) pour la demi-coque de pale de rotor d'éolienne (56),
• insertion de fibres de carbone (58, 60) dans le moule de fabrication (56),
• disposition d'un module de membrure (10) avec les caractéristiques d'une des revendications 1 à 12 dans le moule de fabrication (56),
• encastrement des fibres de carbone (58, 60) et du module de membrure (10) dans une matrice de plastique.

14. Procédé selon la revendication 13, **caractérisé en ce qu'**une connexion électrique entre le conducteur de parafoudre (26) et un élément n'appartenant pas au module de membrure (10) d'un dispositif de parafoudre est réalisée après l'encastrement des fibres de carbone (58, 60) et du module de membrure (10) dans la matrice de plastique.

15. Procédé selon la revendication 14, **caractérisé en ce qu'**une ouverture du module de membrure (10) qui est utilisée pour la réalisation de la connexion électrique est fermée avec un recouvrement lors de l'encastrement des fibres de carbone (58, 60) et du module de membrure (10) dans la matrice de plastique.
